# EUROPÄISCHE PATENTSCHRIFT

(11) **EP 2 687 280 B1**
(45) Veröffentlichungstag und Bekanntmachung des Hinweises auf die Patenterteilung: **16.03.2016**
(21) Anmeldenummer: 13175200.8
(22) Anmeldetag: 04.07.2013
(51) Int. Cl.: B01D 46/30

(54) **Feinstaub- und Schadstoff-Filter für Schredderanlagen**
Fine dust and pollutant filter for shredder systems
Filtre à particules fines et à polluants pour installations de déchiquetage

(30) Priorität: 16.07.2012 DE 202012102626 U
(43) Veröffentlichungstag der Anmeldung: 22.01.2014
(73) Patentinhaber: IMR Innovative Metal Recycling GmbH, 47809 Krefeld (DE)
(72) Erfinder: Adam, Steffen, 47299 Leichlingen (DE)
(74) Vertreter: Stamer, Jan

(56) Entgegenhaltungen:
- DE-A1- 2 419 150
- DE-A1- 2 419 604
- DE-A1- 2 935 773
- DE-A1- 4 002 462

## Beschreibung

Die Erfindung betrifft einen Feinstaub- und Schadstoff-Filter für Schredderanlagen.

Schredder werden zum Zerkleinern von Schrottgemischen eingesetzt. Die Schrottgemische, einschließlich entsorgte Altfahrzeuge werden durch eine Hammermühle in kleine Teile zerteilt, die eine sortenreine Sortierung der Rohstoffe ermöglichen.

Leichte Teile werden in einem Gebläsesystem von den schwereren Teilen getrennt. Metalle werden z.B. nach magnetischen und nicht magnetischen getrennt. Die beim Zerkleinern anfallenden Staubpartikel werden durch Wasserbedüsung ausgewaschen und ausgefiltert. Die durch das Gebläsesystem geförderte und durch die Anlage in einem geschlossenen System hindurchgeführte Luftmenge beträgt je nach Anlage ca. 40.000 - 100.000 m³/Std. Das erfordert entsprechend große Rohrdurchmesser, die jedoch an die aufrecht zu erhaltende notwendige Strömungsgeschwindigkeit zur Materialtrennung anzupassen sind.

Die zurzeit in den Schredder- und Reinigungsanlagen eingesetzten Filtersystem (z.B. Hochdruckventurisysteme) erfassen nur bestimmte Partikelgrößen. Kleinste Partikel und Schadstoffe in gasförmigem Zustand werden nicht erfasst und beseitigt, so dass sie über Abluftkamine mit in die Umgebungsluft ausgeblasen werden. Die Vorgaben der Verwaltungsvorschrift zum Bundes-Immissionsschutzgesetz, Technische Anleitung zur Reinhaltung der Luft (TA Luft) werden bezogen auf die Stoffklassen I, II, III und auf organische Stoffe, je nach Schreddermaterial teilweise deutlich überschritten.

Es ist bekannt, zur Reinigung der Luft von Feinstaub und gasförmigen Schadstoffen oder auch Flüssigkeiten von darin gelösten Schadstoffen Aktivkohle-Filter zu verwenden. Aktivkohlen besitzen eine sehr große innere Oberfläche über die sowohl gelöste Partikel über Adsorption als auch gasförmige Stoffe durch Reduktion gebunden oder entfernt werden können.

Aus der Druckschrift DE 24 19 604 A1 ist eine durch Siebe begrenzte Filterwand in einem Filtergehäuse bekannt, wobei die Filterwand mit einem schüttfähigen Kontaktmaterial, wie z.B. Aktivkohle, gefüllt ist. Das Filtergehäuse stellt in der Grundform einen gleichförmigen Kanal mit rechteckigem Querschnitt dar. Zur Vergrößerung der Fläche der Filterwand kann diese diagonal verlaufend zwischen den Seitenwänden des Kanals, zickzackförmig oder durch Ausbuchtungen der Seitenwände quer zu diesen fest eingebaut sein. Die durch zusätzlich eingesetzte Schwebstofffilter begrenzten Einlass- und Auslass-Öffnungen des Filtergehäuses haben maximal den durch die Seitenwände begrenzten Öffnungsquerschnitt. Die Filterwände dienen der Abscheidung von schädlichen Gasen und radioaktiven Schwebteilchen in kerntechnischen Anlagen. Die Schichtdicken der Filterwände sind an die dazu erforderlichen Verweilzeiten der Gase an der Aktivkohle angepasst.

Aus der Druckschrift DE 24 19 150 A1 ist eine Ausgestaltung des vorstehend beschriebenen Filtergehäuses bekannt, bei der der Raum zwischen den Filterwänden durch eine in eine Seitenwand eingebaute Schleuse von einer mit einem Schutzanzug bekleideten Person betreten werden kann.

Die Filterwirkung der Aktivkohle setzt eine ausreichende Verweildauer und damit reduzierte Strömungsgeschwindigkeit der zu reinigenden Luft in dem Aktivkohle-Filter voraus. Die in Schredderanlagen anfallenden großen Luft-Volumina und vorgegebenen Strömungsgeschwindigkeiten aus dem Hochdruckventurisystem heraus lassen den Einsatz eines Aktivkohle-Filters nicht geeignet erscheinen. Eine nachfolgende Verringerung der Strömungsgeschwindigkeit würde den Durchsatz an Schreddermaterial im vorhandenen System einschränken.

Der Erfindung lag daher die Aufgabe zugrunde, einen Filter für Feinstaub und andere Schadstoffe zu entwickeln, der ausgangsseitig in eine bestehende Schredderanlage vor dem Übergang der Abluft in einen Abluftkamin eingefügt werden kann. Der Filter sollte in der Lage sein, die Anforderungen der TA Luft insbesondere bezüglich der als Gesamtkohlenstoff angegebenen organischen Stoffe zu erfüllen und möglichst zu übertreffen. Er sollte insbesondere auch mit Luftströmungen hoher Luftfeuchtigkeit betrieben werden können.

Diese Aufgabe wird erfindungsgemäß durch die Merkmale des Anspruchs 1 gelöst. Vorteilhafte Weiterbildungen ergeben sich aus den Merkmalen der Unteransprüche.

In ein begehbares quaderförmiges Gehäuse wird in Längsrichtung ein senkrecht stehender Aktivkohle-Filter eingesetzt. Der Aktivkohle-Filter reicht mit luftdichten Anschlüssen vom Boden des Gehäuses bis zur Decke des Gehäuses und bildet eine strömungsdurchlässige Trennwand in dem Gehäuse. Die Einströmseite vor der Trennwand begrenzt einen Rohgasraum im Gehäuse und die Ausströmseite der Trennwand begrenzt einen Reingasraum in dem Gehäuse. Das aus dem vorgeschalteten, bestehenden Reinigungssystem der Schredderanlage ausgeblasene Rohgas wird über einen Staubeinblastrichter in den Rohgasraum eingeblasen. Der Staubeinblastrichter ist mit seiner erweiterten Öffnung auf die Längsseite des Gehäuses am Rohgasraum aufgesetzt. Die von dem vorgeschalteten Hochdruckventurisystem über einen Ventilator in den rohrförmigen Trichtereingang eingedrückte Rohgas-Luftströmung verteilt sich in der Trichteröffnung und füllt den Rohgasraum. Der Ventilator kann insbesondere zur Steuerung einer gleichmäßigen Strömungsgeschwindigkeit eingesetzt sein. Durch die Verteilung der eingangsseitig am Einblastrichter noch zusammengefassten Luftmenge in dem großvolumigen Rohgasraum verringert sich die Strömungsgeschwindigkeit des Rohgases auf ein Maß von ca. 0,3 - 0,4 m/sec, das eine geeignete Reaktionszeit beim Durchströmen des Aktivkohle-Filters sicherstellt. Der Aktivkohle-Filter arbeitet als passives Filtersystem ohne zusätzlichen Energiebedarf.

Nach dem Durchdringen des Aktivkohle-Filters tritt die gereinigte Luft in den Reingasraum ein und wird über einen spiegelbildlich zum Staubeinblastrichter angeordneten Luftausblastrichter an der anderen Längsseite des Gehäuses zum Abluftkamin gedrückt. Die Zusammenführung der gereinigten Luft hin zum verengten Trichterausgang und die Sogwirkung des Abluftkamins sorgen für die notwendige Strömungsgeschwindigkeit zum Absaugen der gereinigten Luft ohne Entstehen eines Rückstaus.

Die zur Verringerung der Strömungsgeschwindigkeit des Rohgases und zur Verdichtung des Reingases auf die Längsseiten des Gehäuses aufgesetzten Staubeinblastrichter und Luftabsaugtrichter erstrecken sich in der Länge nahezu über die gesamte Länge der Längsseite und in der Höhe über etwa ein Fünftel der Höhe des Gehäuses. Vorzugsweise werden die Trichter symmetrisch auf die Fläche der Längsseiten aufgesetzt, um eine möglichst gleichmäßige Verteilung der Luftpartikel im Rohgasraum und gleichmäßige Absaugung aus dem Reingasraum zu ermöglichen. Die Gesamtlänge des Gehäuses kann in einfacher Weise an die zu verarbeitende Luftmenge angepasst werden. Die Höhe des Gehäuses soll das Erfordernis der Begehbarkeit für Wartungszwecke erfüllen. Dazu sind in die Stirnseiten des Rohgas- und des Reingasraumes geeignete Türen einzusetzen. Unter Beachtung der möglichen Aufstellfläche in der Schredderanlage können auch mehrere Gehäuse übereinander aufgestellt werden.

An den Trichtereinlässen sind vorzugsweise Rohrstutzen zur Anbindung an die vorhandenen Reinigungssysteme oder zusätzlicher Ventilatoren angeordnet. Der zusätzliche Energiebedarf für den im Wesentlichen zur Regulierung der Strömungsgeschwindigkeit dienenden Betrieb der Ventilatoren ist gering.

In die Rohrstutzen können schaltbare Ventilklappen eingesetzt sein, die zur Drosselung des Luftstroms oder zur Unterbrechung des Luftstroms, z.B. bei Wartungsarbeiten an dem Feinstaub-Filter-Gehäuse, betätigt werden können.

In den Staubeinblastrichter werden vorzugsweise Luftleitbleche zur Verteilung des am Rohrstutzen eingeblasenen Rohgases für den Eintritt in den Rohgasraum angeordnet.

Im Rohgasraum und im Reingasraum werden Temperaturfühler zur Temperaturmessung angeordnet. Zusätzlich werden im Rohgasraum Wassersprühdüsen angeordnet, die auf die Eintrittsseite des Aktivkohle-Filters gerichtet sind und in Abhängigkeit von einer Temperaturdifferenz im Rohgasraum und im Reingasraum betätigt werden können. Zu beachten ist, dass sich bei einer zu geringen Strömungsgeschwindigkeit der zu reinigenden Luft im Aktivkohle-Filter die Temperatur erhöht, die zur Entzündung der Aktivkohle führen kann.

Die Aktivkohle ist in einen quaderförmigen Käfig mit feinmaschigen Eintritts- und Austrittsflächen eingefüllt. Die feinmaschigen Flächen bestehen dabei aus Drähten mit kreisförmigem Querschnitt und sind zu einem quadratischen Maschenmuster zusammengesetzt. Der kreisförmige Drahtquerschnitt und das quadratischen Maschenmuster haben sich als günstigste Anordnung mit geringstem Strömungswiderstand für die Flächengestaltung herausgestellt.

Unter Berücksichtigung einer vorteilhaften Korngröße der Aktivkohle von ≥ 2 mm haben sich ein Drahtdurchmesser von etwa 0,9 mm und eine Maschenweite von 2x2 mm² als vorteilhaft erwiesen. Die Schichtdicke der Aktivkohle beträgt unter diesen Bedingungen etwa 600 mm.

Um dem Filter-Käfig eine ausreichende Stabilität gegen Ausbeulen der Eintritts- und Austrittsflächen durch den Schüttdruck der Aktivkohle zu geben, werden in den Käfig zusätzliche grobmaschige Stützgitter eingesetzt, die zur Verminderung des Strömungswiderstandes ebenfalls aus Rundstäben bestehen.

Die die feinmaschigen Eintritts- und Austrittsflächen der Filter-Käfige umschließenden Quaderflächen besitzen eine geschlossene Oberfläche, wodurch erreicht wird, dass die zu reinigende Luft von Rohgasraum zum Reingasraum ausschließlich durch den Filter-Käfig hindurch gelangen kann.

In die obere und untere der Quaderflächen sind verschließbare Klappen zum Befüllen und Entleeren der Filter-Käfige mit Aktivkohle eingesetzt. Verbrauchte Aktivkohle kann daher in einfacher Weise durch frische oder wieder aufbereitete Aktivkohle ersetzt werden.

Die durch den Aktivkohle-Filter gebildete Trennwand in dem Gehäuse wird vorzugsweise durch eine Mehrzahl von auswechselbaren Filter-Käfigen gebildet. Dazu werden die Filter-Käfige auf Rollen oder Räder gesetzt und in die seitlichen Stirnseiten des Gehäuses Türen zum Aus- und Einfahren der Filter-Käfige eingesetzt. Die Filter-Käfige weisen an den senkrechten Quaderflächen geeignete Dichtungen auf, die einen Luftdurchtritt zwischen den Filter-Käfigen hindurch verhindern.

Innerhalb des Gehäuses ist an der Decke, dem Boden und den Stirnseiten entlang eine umlaufende Anschlagfläche für die zum Reingasraum weisende Fläche des Filter-Käfigs eingefügt. Aufgrund des Strömungsdrucks von der Rohgasseite her werden die Filter-Käfige gegen die Anschlagfläche gedrückt, wodurch ein Luftdurchtritt am Filter-Käfig vorbei verhindert wird. Zusätzlich können die Filter-Käfige zwischen der Längsseite des Rohgasraums und der Anschlagfläche mechanisch verspannt werden.

Unter Berücksichtigung eines evtl. entstehenden oberen Schüttkegels beim Einfüllen der Aktivkohle in den Filter-Käfig ist es vorteilhaft, wenn der obere Flächenbereich des zur Rohgasseite weisenden Filter-Käfigs luftdicht abgedeckt ist. Die Abdeckung sollte eine Breite von etwa der Hälfte des Abstandes der feinmaschigen Flächen aufweisen, d.h. etwa 300 mm von Decke her abdecken. Damit ist sichergestellt, dass auch bei Vorhandensein eines oberen Schüttkegels die Rohgasluft durch die Aktivkohle hindurch und nicht über diese hinweg geleitet werden kann.

Die als Rohgas eingeblasene Luft hat aufgrund der vorangegangenen Wasserfilterung häufig einen hohen Wassergehalt, der z.T. an den

Luftleitblechen in dem Staubeinblastrichter oder an der Lufteintrittsseite der Filter-Käfige kondensiert und zum Boden des Rohgasraumes oder auch des Reingasraumes abläuft. Zur Entwässerung des Bodens ist es vorteilhaft, wenn dieser von der Aufstellfläche der Filter-Käfige her zur Längsseite des Gehäuses hin abfallend geneigt ausgeführt ist und an der Längsseite entlang eine Rinne zum Sammeln des Wassers eingelassen ist. An die Rinne kann ein aus dem Gehäuse herausführender Ablauf angeschlossen sein. Dieser muss druckdicht gegenüber dem Außenbereich abgeschlossen sein, um ein Entweichen des Rohgases zu verhindern. Als einfacher druckdichter Abschluss hat sich ein mit Wasser gefüllter Siphon erwiesen.

Die erfindungsgemäße Ausbildung des Feinstaub- und Schadstoff-Filters ist insbesondere auf die Anforderungen einer Schredderanlage ausgerichtet und berücksichtigt die Anforderungen bezogen auf den Explosionsschutz, Feuerlöscheinrichtungen, geringen Energieverbrauch, Wasserabscheidung und Wasserablauf, einen Luftdurchlass mit geringem Strömungswiderstand, Überwachung der Betriebssicherheit und wartungsfreundliche Zugänge zum Wechseln der Filter-Käfige.

Ein Ausführungsbeispiel des erfindungsgemäßen Filters ist in der Zeichnung schematisch dargestellt und wird nachfolgend anhand der Figuren näher beschrieben. Dabei zeigen
- Fig. 1: einen Querschnitt durch das Gehäuse in der Ansicht auf eine Stirnseite,
- Fig. 2: eine Ansicht auf eine Längsseite des Gehäuses,
- Fig. 3: einen Querschnitt durch das Gehäuse in der Aufsicht,
- Fig. 4: einen Querschnitt durch das Gehäuse in der Ansicht im Deckenbereich,
- Fig. 5: einen Querschnitt durch das Gehäuse in der Ansicht im Bodenbereich,
- Fig. 6: eine Ansicht auf einen Filter-Käfig und
- Fig. 7: einen Querschnitt durch einen Filter-Käfig.

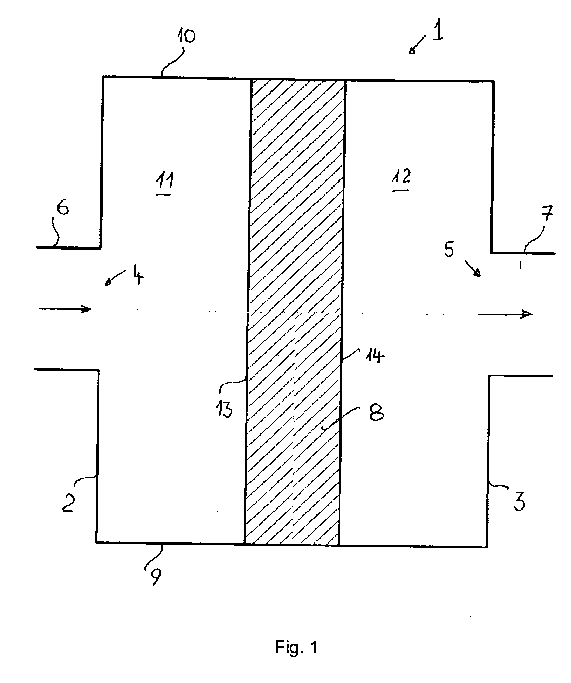

Der in Fig. 1 dargestellte Querschnitt durch das Gehäuse 1 des Feinstaub- und Schadstoff-Filters in der Ansicht auf die Stirnseite zeigt den grundsätzlichen Aufbau. In den Seitenflächen 2, 3 sind schlitzförmige Öffnungen 4, 5 enthalten, auf die ein Staubeinblastrichter 6 und ein Luftabsaugtrichter 7 aufgesetzt sind. In das Gehäuse 1 ist ein Aktivkohle-Filter 8 eingesetzt, der vom Boden 9 bis zur Decke 10 des Gehäuses 1 eine strömungsdichte Trennwand bildet und das Gehäuse 1 in einen Rohgasraum 11 und einen Reingasraum 12 aufteilt. Die zu reinigende Luft wird über den Staubeinblastrichter 6 gegen die Eintrittsfläche 13 des Aktivkohle-Filters 8 gedrückt, durchdringt den Aktivkohle-Filter 8, tritt an dessen Austrittsseite 14 aus und wird über den Luftabsaugtrichter 7 in einen nicht dargestellten Abluftkamin geleitet.

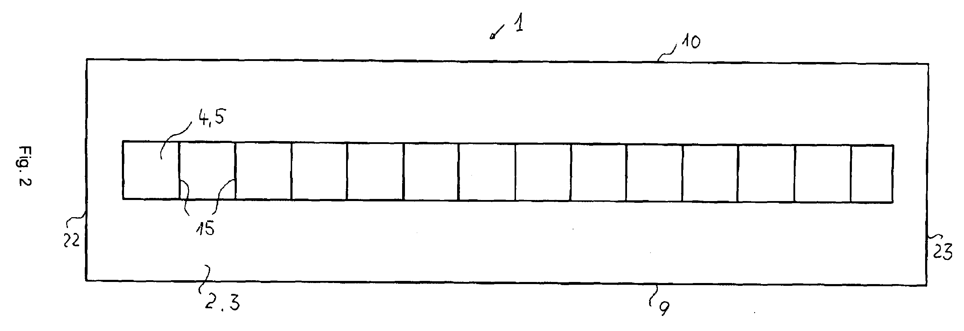

Aus der in Fig. 2 dargestellten Ansicht auf eine der Seitenflächen 2, 3 ist die Ausdehnung der schlitzförmigen Öffnungen 4, 5 zu entnehmen. Die Öffnungen 4, 5 werden durch Streben 15 in den Seitenflächen 2, 3 stabilisiert. In der Länge erstrecken sich die Öffnungen 4, 5 nahezu über die gesamte Länge der Seitenflächen 2, 3. In der Höhe betragen sie etwa ein Fünftel der Höhe des Gehäuses 1. Vorzugsweise sind die Öffnungen 4, 5 symmetrisch in die Seitenflächen 2, 3 eingefügt.

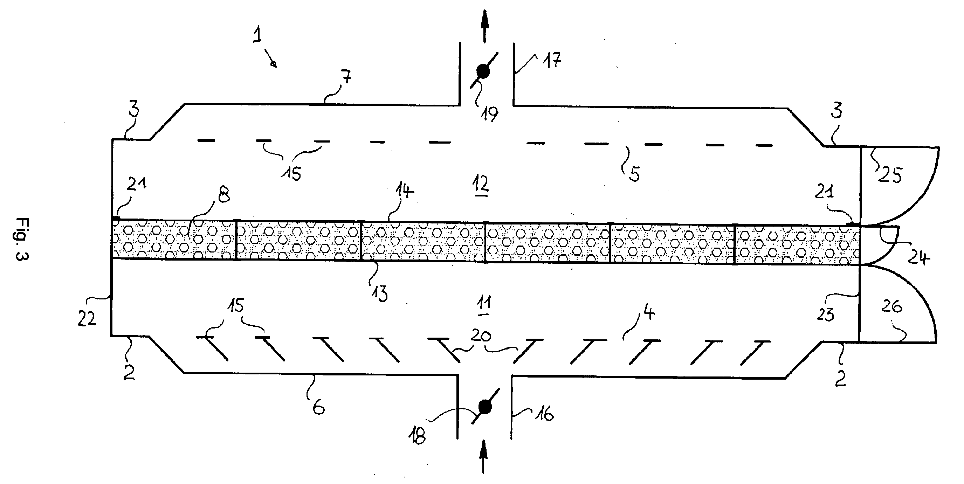

Aus dem in Fig. 3 dargestellten Querschnitt durch das Gehäuse 1 in einer Aufsicht sind in Längsrichtung des Gehäuses 1 mehrere nebeneinander stehende Käfige als Aktivkohle-Filter 8 zu entnehmen. Die Anschlussflächen der einzelnen Filter-Käfige sind mit nicht weiter dargestellten Dichtungen versehen, die eine direkte Durchströmung an den Anschlussflächen verhindern. Als Dichtungen können an sich bekannte elastische Lippendichtungen und/oder als Nut und Feder ausgebildete, ineinander greifende Flächenformen vorgesehen sein. Zur Abdichtung gegenüber dem Reingasraum 12 sind umlaufende Anschlagflächen 21 vorgesehen.

Der Staubeinblastrichter 6 und der Luftabsaugtrichter 7 wissen am Trichterfuß Rohrstutzen 16, 17 auf, in die Ventilklappen 18, 19 eingesetzt sind. Durch Querstellen der Ventilklappen 18, 19 kann die Durchströmung des Gehäuses 1 geschlossen werden.

In den Staubeinblastrichter 6 sind Luftleitbleche 20 zur Verteilung der zu reinigenden Luft über die Öffnung 4 eingesetzt.

In eine oder beide Stirnseiten 22, 23 des Gehäuses 1 sind luftdicht verschließbare Türen 24, 25, 26 eingesetzt, die einerseits das Herausführen der Filter-Käfige 8 und andererseits die Begehung des Rohgasraums 11 und des Reingasraums 12 für Wartungszwecke ermöglichen. Vor den Stirnseiten 22, 23 können nicht dargestellte Arbeitspodeste aufgestellt sein, von denen die auszuwechselnden Filter-Käfige 8 abgehoben werden können.

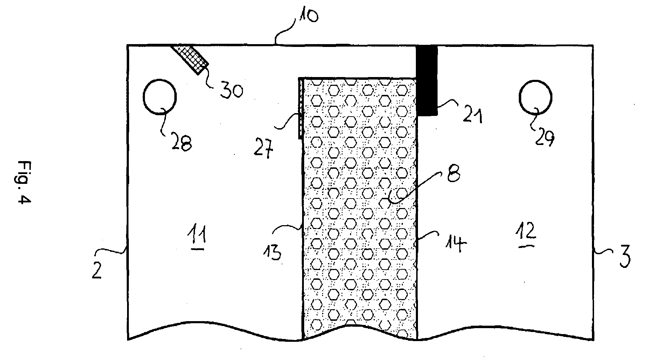

Fig. 4 zeigt im weiteren Detail die Ausgestaltung des Gehäuses 1 im Bereich der Decke 10. Ein Filter-Käfig 8 ist luftdicht an eine Anschlagfläche 21 angedrückt. Der obere Bereich des Filter-Käfigs 8 ist durch eine Abdeckung 27 gegen einen Lufteintritt geschützt. Im Rohgasraum 11 ist ein erster Temperaturfühler 28 und im Reingasraum ein zweiter Temperaturfühler 29 angeordnet. Eine Temperaturerhöhung im Rohgasraum 11 wird als Temperaturdifferenz der Temperaturfühler 28, 29 an ein nicht dargestellte Sicherheitseinrichtung gemeldet, die den Wasseraustritt aus einer Wassersprühdüse 30 zur Abkühlung eines Filter-Käfigs 8 veranlasst.

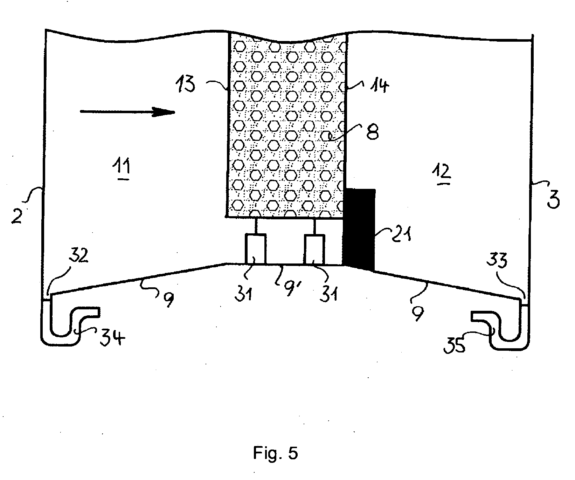

Fig. 5 zeigt im weiteren Detail die Ausgestaltung des Gehäuses 1 im Bereich des Bodens 9. Ein Filter-Käfig 8 steht auf einem waagerechten Bodenteil 9' auf Rollen oder Rädern 31. Zum Reingasraum 12 hin liegt der Filter-Käfig 8 an der im Gehäuse 1 umlaufenden Anschlagfläche 21 an, so dass unter dem Filter-Käfig 8 hindurch keine ungefilterte Luft in den Reingasraum 12 gelangen kann. Von dem waagerechten Bodenteil 9' fällt der Boden 9 zu den Längsseiten 2, 3 abwärts geneigt und mündet in eine Rinne 32, 33. Das an den Filter-Käfigen 8 ablaufende und anderes Kondenswasser aus dem Rohgasraum 11 und dem Reingasraum 12 wird in der Rinne 32, 33 gesammelt und über einen Ablauf 34, 35 abgelassen. Der Ablauf 34, 35 ist als wassergefüllter Siphon ausgebildet und verschließt über die Wasserfüllung den Innenraum des Gehäuses 1 druckdicht gegenüber dem Außenraum. Das aus dem Siphon auslaufende Wasser wird gesondert aufgefangen und weiter gereinigt.

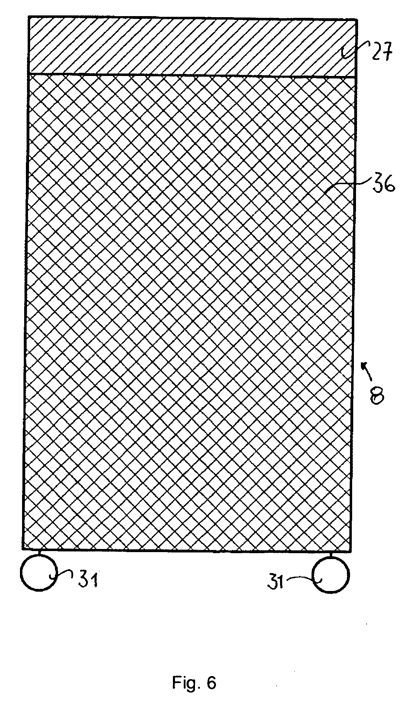

Fig. 6 zeigt eine Ansicht auf einen Filter-Käfig 8. Die Luftein- und - austrittsflächen 13, 14 der Filter-Käfige 8 sind als feinmaschiges Netz 36 mit einem quadratischen Maschenmuster ausgebildet.

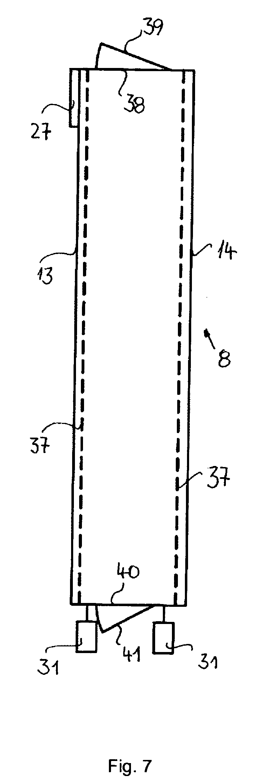

Aus Fig. 7 ist das zur Verstärkung des feinmaschigen Netzes 36 in den Filter-Käfig 8 eingefügte grobmaschige Stützgitter 37 zu ersehen, das ebenfalls aus Drähten mit kreisförmigem Querschnitt gebildet ist. In die geschlossene obere Quaderfläche 38 des Filter-Käfigs 8 ist eine Füllklappe 39 und in die untere Quaderfläche 40 ist eine Entleerungsklappe 41 eingesetzt. Je nach Breite der Filter-Käfige 8 können auch mehrere der Klappen 39, 41 nebeneinander angeordnet sein.

### Bezugszeichenliste

- 1: Gehäuse
- 2,3: Seitenflächen
- 4,5: schlitzförmige Öffnungen
- 6: Staubeinblastrichter
- 7: Luftabsaugtrichter
- 8: Aktivkohle-Filter, Filter-Käfig
- 9,9': Boden des Gehäuses 1
- 10: Decke des Gehäuses 1
- 11: Rohgasraum
- 12: Reingasraum
- 13: Eintrittsseite Aktivkohle-Filter 8
- 14: Austrittsseite Aktivkohle-Filter 8
- 15: Streben in Seitenfläche 2,3
- 16,17: Rohrstutzen
- 18,19: Ventilklappen
- 20: Luftleitbleche
- 21: Anschlagfläche
- 22,23: Stirnseite Gehäuse 1
- 24,25,26: Türen in Stirnseite
- 27: Abdeckung Filter-Käfig
- 28,29: Temperaturfühler
- 30: Wassersprühdüse
- 31: Rollen, Räder
- 32,33: Rinne
- 34,35: Ablauf
- 36: feinmaschiges Netz
- 37: Stützgitter
- 38: obere Quaderfläche Filter-Käfig
- 39: Füllklappe
- 40: untere Quaderfläche Filter-Käfig
- 41: Entleerungsklappe

## Patentansprüche

1. Feinstaub- und Schadstoff-Filter für Schredderanlagen, **gekennzeichnet durch**
a) ein **durch** eine Person begehbares quaderförmiges Gehäuse (1),
b) einen in Längsrichtung des Gehäuses (1) in dieses eingesetzten, senkrecht stehenden Aktivkohle-Filter (8), der innerhalb des Gehäuses (1) einen für Wartungszwecke begehbaren Rohgasraum (11) und einen Reingasraum (12) begrenzt,
c) einen auf eine Öffnung (4) in der dem Rohgasraum (11) zugeordneten Längsseite (2) des Gehäuses (1) aufgesetzten Staubeinblastrichter (6) und
d) einen auf eine Öffnung (5) in der dem Reingasraum (12) zugeordneten Längsseite (3) des Gehäuses (1) aufgesetzten Luftabsaugtrichter (7), wobei
sich die Öffnungen (4, 5) für den Staubeinblastrichter (6) und den Luftabsaugtrichter (7) in der Länge nahezu über die gesamte Länge der Längsseite (2, 3) und in der Höhe über etwa 1/5 der Höhe des Gehäuses (1) erstrecken undzum Rohgas-Einblasen und Reingas-Absaugen symmetrisch zur Längsrichtung der Trichteröffnungen Rohrstutzen (16, 17) am Trichtereinlass bzw. -auslass angeordnet sind.

2. Filter nach Anspruch 1, **dadurch gekennzeichnet, dass** in die Rohrstutzen (16, 17) schaltbare Ventilklappen (18, 19) eingesetzt sind.

3. Filter nach Anspruch 1, **dadurch gekennzeichnet, dass** in den Staubeinblastrichter (6) Luftleitbleche (20) zur Verteilung einer am Rohrstutzen (16) eingeblasenen Rohgasströmung über die Öffnung (4) in der Längsseite (2) des Gehäuses (1) vorhanden sind.

4. Filter nach Anspruch 1, **dadurch gekennzeichnet, dass** im Rohgasraum (11) und im Reingasraum (12) Temperaturfühler (28, 29) zur Temperaturmessung angeordnet sind und im Rohgasraum (11) in Abhängigkeit von der gemessenen Temperaturdifferenz betätigbare und auf den Aktivkohle-Filter (8) gerichtete Wassersprühdüsen (30) vorhanden sind.

5. Filter nach Anspruch 1, **dadurch gekennzeichnet, dass** der Aktivkohle-Filter (8) als quaderförmiger Käfig mit feinmaschigen Eintritts- (13) und Austrittsflächen (14) ausgebildet ist, die dem Staubeinblastrichter (6) und dem Luftabsaugtrichter (7) gegenüber liegen.

6. Filter nach Anspruch 5, **dadurch gekennzeichnet, dass** die feinmaschigen Flächen (36) aus Drähten mit kreisförmigem Querschnitt bestehen.

7. Filter nach Anspruch 6, **dadurch gekennzeichnet, dass** die Drähte zu einem quadratischen Maschenmuster zusammengesetzt sind.

8. Filter nach Anspruch 5, **dadurch gekennzeichnet, dass** innerhalb des Filter-Käfigs (8) den feinmaschigen Flächen (36) ein grobmaschiges Stützgitter (37) aus Rundstäben zugeordnet ist.

9. Filter nach Anspruch 5, **dadurch gekennzeichnet, dass** die die feinmaschigen Flächen (36) umschließenden Quaderflächen geschlossen sind.

10. Filter nach Anspruch 9, **dadurch gekennzeichnet, dass** in die obere (38) und untere Quaderfläche (40) verschließbare Klappen (39, 41) zum Einfüllen und Entleeren der Aktivkohle eingesetzt sind.

11. Filter nach Anspruch 5, **dadurch gekennzeichnet, dass** mindestens zwei in Längsrichtung des Gehäuses (1) aneinander anschließende Filter-Käfige (8) vorhanden sind.

12. Filter nach Anspruch 11, **dadurch gekennzeichnet, dass** die Filter-Käfige (8) auswechselbar in das Gehäuse (1) eingesetzt sind.

13. Filter nach Anspruch 5, **dadurch gekennzeichnet, dass** innerhalb des Gehäuses (1) an der Decke, dem Boden und den Stirnseiten eine umlaufende Anschlagfläche (21) für die zum Reingasraum (12) weisende Fläche des Filter-Käfigs (8) eingefügt ist.

14. Filter nach Anspruch 5, **dadurch gekennzeichnet, dass** der obere Flächenbereich des zur Rohgasseite weisenden Filter-Käfigs (8) mit einer luftdichten Abdeckung (27) versehen ist.

15. Filter nach Anspruch 1, **dadurch gekennzeichnet, dass** der Boden (9) des Gehäuses (1) von der Aufstellfläche (9') des Aktivkohle-Filters (8) zu den Längsseiten (2, 3) hin abfallend geneigt ist und parallel zu den Längsseiten (2, 3) jeweils eine Rinne (32, 33) in den Boden (9) eingelassen ist.

16. Filter nach Anspruch 15, **dadurch gekennzeichnet, dass** an die Rinne (32, 33) ein aus dem Gehäuse (1) herausführender Ablauf (43, 35) angeschlossen ist, der über einen wassergefüllten Siphon gegenüber dem Außenbereich druckdicht abgeschlossen ist.

## Claims

1. Fine dust and pollutant filter for shredder systems,
**characterized by**
a) a cube-shaped housing (1) that can be entered by an individual,
b) an upright active carbon filter (8) inserted into the housing (1) in the longitudinal direction of the latter, which, within the housing (1), delimits an untreated gas chamber (11) that can be entered for maintenance purposes and a clean gas chamber (12),
c) a dust injection funnel (6) placed on an opening (4) in the long side (2) of the housing (1) that is assigned to the untreated gas chamber (11), and
d) an air extraction funnel (7) placed on an opening (5) in the long side (3) of the housing (1) that is assigned to the clean gas chamber (12), wherein
the openings (4, 5) in the dust injection funnel (6) and the air extraction funnel (7) extend in length virtually over the entire length of the long side (2, 3) and in height over approximately 1/5 of the height of the housing (1) and, for the untreated gas injection and clean gas extraction, pipe connections (16, 17) are arranged on the funnel inlet and outlet, symmetrically with respect to the longitudinal direction of the funnel openings.

2. Filter according to Claim 1, **characterized in that** controllable valve flaps (18, 19) are inserted into the pipe connections (16, 17).

3. Filter according to Claim 1, **characterized in that** in the dust injection funnel (6) there are air guide plates (20) for distributing an untreated gas stream injected at the pipe connection (16) via the opening (4) in the long side (2) of the housing (1).

4. Filter according to Claim 1, **characterized in that** temperature sensors (28, 29) for temperature measurement are arranged in the untreated gas chamber (11) and in the clean gas chamber (12), and in the untreated gas chamber (11) there are water spray nozzles (30) that can be actuated as a function of the measured temperature difference and are aimed at the active carbon filter (8).

5. Filter according to Claim 1, **characterized in that** the active carbon filter (8) is formed as a cube-shaped cage with fine-mesh inlet (13) and outlet surfaces (14), which are opposite the dust injection funnel (6) and the air extraction funnel (7).

6. Filter according to Claim 5, **characterized in that** the fine-mesh surfaces (36) are composed of wires with a circular cross section.

7. Filter according to Claim 6, **characterized in that** the wires are assembled to form a square mesh pattern.

8. Filter according to Claim 5, **characterized in that** within the filter cage (8), the fine-mesh surfaces (36) are assigned a coarse-mesh supporting lattice (37) made of round rods.

9. Filter according to Claim 5, **characterized in that** the rectangular surfaces enclosing the fine-mesh surfaces (36) are closed.

10. Filter according to Claim 9, **characterized in that** closable flaps (39, 41) for filling and emptying the active carbon are inserted into the upper (38) and the lower rectangular surface (40).

11. Filter according to Claim 5, **characterized in that** there are at least two filter cages (8) adjoining one another in the longitudinal direction of the housing (1).

12. Filter according to Claim 11, **characterized in that** the filter cages (8) are inserted replaceably into the housing (1).

13. Filter according to Claim 5, **characterized in that**, within the housing (1), on the ceiling, the base and the end sides, there is inserted a circumferential stop surface (21) for the surface of the filter cage (8) that points towards the clean gas chamber (12).

14. Filter according to Claim 5, **characterized in that** the upper surface area of the filter cage (8) pointing towards the untreated gas side is provided with an airtight covering (27).

15. Filter according to Claim 1, **characterized in that** the base (9) of the housing (1) is inclined so as to fall from the erection surface (9') of the active carbon filter (8) to the long sides (2, 3), and in each case a channel (32, 33) is let into the base (9), parallel to the long sides (2, 3).

16. Filter according to Claim 15, **characterized in that** a drain (43, 35) leading out of the housing (1) is connected to the channel (32, 33) and is sealed off in a pressure-tight manner with respect to the exterior via a water-filled siphon.

## Revendications

1. Filtre à fines poussières et substances toxiques pour installations de déchiquetage, **caractérisé par** :
a) un caisson (1) de forme parallélépipédique et sur lequel une personne peut marcher,
b) un filtre (8) à charbon actif, disposé debout et inséré dans le sens de la longueur du caisson (1), qui délimite à l'intérieur du caisson (1) un espace (11) à gaz brut sur lequel on peut marcher pour des opérations d'entretien et un espace (12) à gaz épuré,
c) un entonnoir (6) de soufflage de poussières placé sur une ouverture (4) ménagée dans le côté longitudinal (2) du caisson (1) associé à l'espace (11) à gaz brut et
d) un entonnoir (7) d'aspiration d'air placé sur une ouverture (5) ménagée dans le côté longitudinal (3) du caisson (1) associé à l'espace (12) à gaz épuré,
les ouvertures (4, 5) prévues pour l'entonnoir (6) d'injection de poussières et l'entonnoir (7) d'aspiration d'air s'étendent sensiblement sur toute la longueur du côté longitudinal (2, 3) et à une hauteur qui dépasse d'environ 1/5 la hauteur du caisson (1) et des tubulures (16, 17) étant disposées symétriquement par rapport au sens de la longueur des ouvertures des entonnoirs sur l'entrée et la sortie des entonnoirs pour souffler le gaz brut et aspirer le gaz épuré.

2. Filtre selon la revendication 1, **caractérisé en ce que** des clapets de soupape (18, 19) commutables sont insérés dans les tubulures (16, 17).

3. Filtre selon la revendication 1, **caractérisé en ce que** des tôles (20) de guidage d'air qui répartissent un écoulement de gaz brut soufflé sur la tubulure (16) sur l'ouverture (4) dans le sens de la longueur (2) du caisson (1) sont prévues dans l'entonnoir (6) de soufflage de poussières.

4. Filtre selon la revendication 1, **caractérisé en ce que** des sondes de température (28, 29) qui mesurent la température sont disposées dans l'espace (11) à gaz brut et dans l'espace (12) à gaz épuré et **en ce que** des tuyères (30) de pulvérisation d'eau orientées sur le filtre (8) à charbon actif et actionnées en fonction de la différence de température mesurée sont prévues dans l'espace (11) à gaz brut.

5. Filtre selon la revendication 1, **caractérisé en ce que** le filtre (8) à charbon actif est configuré comme cage de parallélépipédique dotée de surfaces ponctuelles d'entrée (13) et de sortie (14) à fines mailles qui sont situées face à l'entonnoir (6) de soufflage de poussières et à l'entonnoir (7) d'aspiration d'air.

6. Filtre selon la revendication 5, **caractérisé en ce que** les surfaces (36) à fines mailles sont constituées de fils de section transversale circulaire.

7. Filtre selon la revendication 6, **caractérisé en ce que** les fils sont assemblés en un motif de mailles carrées.

8. Filtre selon la revendication 5, **caractérisé en ce qu'**à l'intérieur de la cage de filtre (8), une grille de soutien (37) à grosses mailles en barreaux ronds est associée aux surfaces à fines mailles (36).

9. Filtre selon la revendication 5, **caractérisé en ce que** les surfaces (36) à fines mailles sont fermées par des surfaces parallélépipédiques de pourtour.

10. Filtre selon la revendication 9, **caractérisé en ce que** des clapets coulissants (39, 41) qui permettent de remplir et de vider le charbon actif sont insérés dans la surface parallélépipédique supérieure (38) et la surface parallélépipédique inférieure (40).

11. Filtre selon la revendication 5, **caractérisé en ce qu'**au moins deux cages de filtre (8) adjacentes l'une à l'autre sont prévues dans le sens de la longueur du caisson (1).

12. Filtre selon la revendication 11, **caractérisé en ce que** les cages de filtre (8) sont insérées dans le caisson (1) de manière à pouvoir être remplacées.

13. Filtre selon la revendication 5, **caractérisé en ce qu'**à l'intérieur du caisson (1), sur le plafond, le plancher et les côtés frontaux, une surface périphérique de butée (21) pour la surface de la cage de filtre (8) tournée vers l'espace (12) à gaz épuré est insérée.

14. Filtre selon la revendication 5, **caractérisé en ce que** la partie supérieure de la surface de la cage de filtre (8) tournée vers le côté gaz brut est dotée d'un recouvrement (27) étanche à l'air.

15. Filtre selon la revendication 1, **caractérisé en ce que** le fond (9) du caisson (1) est incliné depuis la surface de pose (9') du filtre (8) à charbon actif en direction des côtés longitudinaux (2, 3) et **en ce qu'**une rainure (32, 33) est ménagée dans le fond (9) parallèlement aux côtés longitudinaux (2, 3).

16. Filtre selon la revendication 15, **caractérisé en ce qu'**une évacuation (43, 35) qui sort du caisson (1) est raccordée à la rainure (32, 33) et est fermée de manière étanche à la pression par rapport à l'extérieur par l'intermédiaire d'un siphon rempli d'eau.
